# EUROPEAN PATENT SPECIFICATION

(11) **EP 2 385 146 B1**
(45) Date of publication and mention of the grant of the patent: **05.04.2017**
(21) Application number: 10735926.7
(22) Date of filing: 31.01.2010
(51) Int. Cl.: C21B 5/00, C22B 5/10, F27B 1/08, F27B 3/20, H05B 6/78, F27D 99/00, C21B 11/02, C21B 11/10, C21B 15/00, F27D 11/12

(54) **VERTICAL MICROWAVE SMELTING FURNACE**
VERTIKALER MIKROWELLENRENNOFEN
FOUR DE FUSION VERTICAL À MICRO-ONDES

(30) Priority: 31.01.2009 JP 2009021040
(43) Date of publication of application: 09.11.2011
(73) Proprietor: Tokyo University of the Arts, Taito-ku Tokyo 110-8714 (JP)
(72) Inventor: NAGATA, Kazuhiro, Yokohama-shi Kanagawa 224-0006 (JP); SATO, Motoyasu, Toki-shi Gifu 509-5292 (JP); KANAZAWA, Miyuki, Tokyo 1770051 (JP); TAKAYAMA, Sadatsugu, Toki-shi, Gifu 5095292 (JP); KASHIMURA, Keiichiro, Toki-shi, Gifu 5095292 (JP)
(74) Representative: Glawe, Delfs, Moll
(86) International application number: PCT/JP2010/051299
(87) International publication number: WO 2010/087464

(56) References cited:
- JP-A- 6 243 963
- JP-A- 54 159 312
- JP-A- 60 105 195
- JP-A- 2007 205 639
- KYOSUKE HARA ET AL.: 'Micro-ha Kanetsu Renzoku Seijuho no Kaihatsu' CURRENT ADVANCES IN MATERIALS AND PROCESSES vol. 21, no. 1, 01 March 2008, page 222

## Description

### TECHNICAL FIELD

The present invention relates to a vertical microwave smelting furnace such as a smelting furnace for obtaining pig iron from iron ore, and specifically relates to a vertical microwave smelting furnace for obtaining molten pig iron by using microwaves to heat and melt raw material containing iron ore and a carbon source such as charcoal or coke, thereby reducing the iron ore with the carbon.

### BACKGROUND ART

In the field of iron and steel, molten pig iron is commonly obtained using blast furnace smelting methods. Specifically, iron ore that is used as the iron oxide is introduced from the top of a blast furnace (smelting furnace) along with a pellet-form material formed from limestone and coke or the like that is used as the carbon source that is a reducing agent. Hot gas (air) is drawn in from a tuyere in a lower part of the blast furnace, producing an upward flow of hot air in the blast furnace, while the fallen pellets are also heated with the hot air. The iron ore is reduced by a reaction between the iron ore and the coke. The reduced iron melts to form molten pig iron and collects in the bottom of the blast furnace. After a determinate amount of pig iron has collected, the iron in the bottom of the furnace is removed from a tapping hole in the bottom of the furnace and flows through a runner to be collected in a ladle (e.g., Patent Document 1).

However, with conventional blast furnace smelting methods, six or more hours are required at temperatures of about 1500°C or above in order to reduce and melt the iron ore, and production efficiency is poor. An additional problem is that two tons of CO₂ gas is discharged for every ton of pig iron.

On the other hand, patent document 2 describes a method for producing iron powder by heating and reducing iron oxide using microwaves. This iron powder production method involves mixing iron ore, mill scale, or other ground iron oxide; a microwave high-dielectric-constant material used as a carbon source having carbon as a primary component, such as coke, charcoal, activated carbon, or carbon micropowder; and a carbonate such as calcium carbonate, magnesium carbonate, or sodium carbonate. By irradiating this mixture with microwaves, the carbon source internally heats to temperatures in excess of 900°C and reacts with the CO₂ gas that is generated by thermal decomposition of the carbonate in the mixture, converting it to CO gas. This CO gas reduces the iron oxide to generate iron powder.

JP 2007 205 639 A discloses a blast furnace, wherein a raw material mixture is supplied into the furnace main body. The raw material mixture is irradiated by a microwave from a waveguide tube through a heat insulator and a refractory which constitute the furnace main body.

### [Prior Art Literature]

Patent Document 1: Japanese Laid-open Patent Application No. 11-229007
Patent Document 2: Japanese Laid-open Patent Application No. 06-116616

### DISCLOSURE OF THE INVENTION

### [Problems the Invention Is Intended to Solve]

However, the microwave-assisted method for producing iron powder described in patent document 2 involves using microwaves to heat a mixture of iron oxide such as iron ore, a carbon source such as coke, and a carbonate, thereby internally heating the carbon source to temperatures in excess of 900°C. The CO₂ gas resulting from carbonate decomposition in the mixture reacts with the carbon source to produce CO gas, and this CO gas then reduces the iron oxide. Because the iron ore and coke or the like are not melted, only iron powder can be produced, and the method does not allow the efficient production of large quantities of molten pig iron.

The present invention was developed in light of the problems described above, it being an object of the invention to provide a vertical microwave smelting furnace that does not use a blast furnace smelting method, whereby molten pig iron can be produced with high energy efficiency and whereby precious metals and the like can be recovered from so-called urban mines.

### [Means for Solving the Problems]

The vertical microwave smelting furnace according to the present invention comprises a vertical furnace body having in an upper part a raw material feed port; a furnace floor member provided on a furnace bottom of the vertical furnace body; a microwave irradiation chamber that communicates with the vertical furnace body in a lower side part of the vertical furnace body, that is provided so as to widen sideways from the lower side part, and that has at least a portion of an inner wall made of a material that reflects microwaves; a smelting product take-off opening that is provided in a lower part of the microwave irradiation chamber; a microwave introduction window that is formed from a material that admits microwaves in order to introduce microwaves into the microwave irradiation chamber; and a microwave irradiation device for irradiating the interior of the microwave irradiation chamber with microwaves via the microwave introduction window, wherein said microwave irradiation chamber is adapted to directly irradiate raw material on said furnace floor member with microwave irradiation in order to heat said raw material.

According to the vertical microwave smelting furnace described above, the raw material includes, for example, iron ore and a carbon source, and the smelting product is molten pig iron. In addition, according to the vertical microwave smelting furnace, when the raw material is a mixed powder of iron ore and coke, the microwave irradiation device preferably emits microwaves at one or more frequencies in the range of 0.915 to 140 GHz. In addition, in the microwave irradiation device, the beam direction is preferably electrically varied by controlling the wave front and phase of the microwaves.

In addition, the furnace floor member is inserted into the furnace from below the furnace bottom, and the top surface constitutes a convex surface with a center that protrudes upwards, while being supported so that it can move vertically. In a preferred configuration, by adjusting the vertical position of the furnace floor member, the aperture surface area between the bottom side walls of the vertical furnace body and the furnace floor member is adjusted, and the feed rate of raw material into the microwave irradiation chamber is adjusted. In this case, for example, the furnace floor member is composed of material having carbon as primary component, which is consumed by reacting with the molten pig iron.

In addition, the microwave irradiation chamber, for example, can have a configuration whereby it is internally lined with microwave-reflective copper or copper alloy, stainless steel, gold-coated stainless steel, or graphite.

The vertical microwave smelting furnace according to another aspect of the present invention comprises a vertical furnace body having one or a plurality of raw material feed ports in an upper part; a furnace head part made from a refractory that is provided in the furnace body and partitions an interior of the furnace body into an upper part and lower part; a furnace floor part made from a refractory that is provided in a furnace floor of the vertical furnace body, an applicator that is a reaction space being formed between the furnace floor part and said furnace head part; a lining for reflecting microwaves, the lining provided on surfaces of said furnace floor part and furnace head part facing said applicator, the lining being grounded, and the lining being made of a conductive substance; a smelting product take-off opening that is provided on said furnace floor part; a microwave introduction window that is formed from a material that admits microwaves in order to introduce microwaves into said microwave irradiation chamber; and a microwave irradiation device for irradiating the interior of said microwave irradiation chamber with microwaves via said microwave introduction window, wherein said applicator is adapted to directly irradiate raw material on said furnace floor part with microwave irradiation in order to heat said raw material.

The inner lining, for example, is a graphite sheet, plate, or block.

Moreover, the vertical furnace body, for example, is a steel shell that is formed from steel material and has an inside that is lined with graphite, alumina, or silica.

Moreover, with the vertical microwave smelting furnace of the present invention, a waste material of an electronic device may be used as raw material, in which case the smelting product is precious metal or rare metal.

### [Effect of the Invention]

According to the present invention, for example, raw material containing iron ore and a carbon source is introduced into the vertical furnace body from a top part of the vertical furnace body, and the raw material is conducted into the microwave irradiation chamber in a bottom part of the vertical furnace body. The microwave irradiation chamber is irradiated with microwaves from a window that admits microwaves, the raw material inside the microwave irradiation chamber is heated with the microwaves, and the iron ore is reduced. For this reason, the raw material such as iron ore, coke or another carbon source can be heated with high efficiency by utilizing microwaves, thereby allowing production of molten pig iron at high energy efficiency.

When the raw material is a powder-form material, the raw material can be heated with microwaves at higher efficiency by using a microwave irradiation device that allows irradiation with microwaves having one or multiple frequencies in the range of 0.915 to 140 GHz. In addition, by controlling the microwave wave front and phase of the microwave irradiation device, the beam direction can be electrically varied, thereby allowing efficient heating to be carried out by uniformly irradiating the raw material in the microwave irradiation chamber with microwaves.

By using a furnace floor member that has a convex surface in which the center of the top surface protrudes, the raw material that has fallen though the interior of the vertical furnace body is distributed towards the periphery by the furnace floor part, and is guided towards the microwave irradiation chamber that is provided in the lower side part of the vertical furnace body so as to widen sideways from the bottom side part. By regulating the vertical location of the furnace floor member and adjusting the aperture surface area between the furnace floor member and the lower side walls of the vertical furnace body, the rate at which raw material is fed into the microwave irradiation chamber can be adjusted, thereby controlling the pig iron tapping rate.

In addition, when material having carbon as its primary component is used as the furnace floor member instead of a refractory, the carbon material reacts with the molten pig iron and is consumed, and so it is necessary to raise the furnace floor member over time. However, by using a carbon material as the furnace floor member in this manner, the furnace floor member is also utilized as a carbon source for reacting with the iron ore. Moreover, when a carbon material is used as the furnace floor member, the carbon material reflects microwaves, which has the advantage of allowing more effective utilization of the microwaves for heating the raw materials.

In addition, the vertical furnace body, for example, has a lining of graphite, alumina, or silica on the inside of a steel shell formed from steel material. In this case, the steel material reflects microwaves, and so the microwaves will not escape to the exterior. Moreover, the inner surface of the microwave irradiation chamber is lined with microwave-reflective copper or copper alloy, stainless steel, gold-coated stainless steel, or graphite, thereby allowing the microwaves to be efficiently reflected inside the microwave irradiation chamber and to be effectively used for heating the raw material.

Moreover, when the raw material is electronic device waste material, precious metals or rare metals that are contained in the electronic device waste material can be recovered using the microwave smelting furnace of the present invention.

### BRIEF DESCRIPTION OF THE DRAWINGS

FIG. 1 is a diagram showing the microwave-heated continuous smelting furnace pertaining to a first embodiment of the present invention.
FIG. 2 is a diagram showing the microwave-heated continuous smelting furnace pertaining to a second embodiment of the present invention.

### BEST MODE FOR CARRYING OUT THE INVENTION

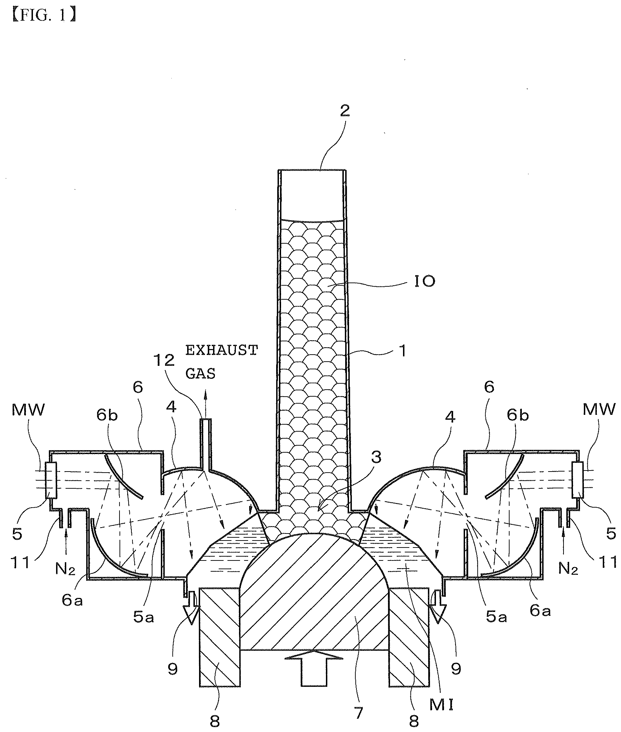

Next, embodiments of the present invention will be described in detail with reference to the attached drawings. FIG. 1 is a vertical sectional view showing a vertical microwave smelting furnace pertaining to a first embodiment of the present invention. A vertical furnace body 1 is an elongated furnace such as a blast furnace, which has a structure in which a steel shell inner surface formed from a steel such as stainless steel is lined with a refractory or the like. Covering the steel shell is carried out so that microwaves are reflected and do not escape to the outside. The refractory lining material or the like for the steel shell is preferably microwave-reflective graphite or microwave-passing alumina or silica. The part of the furnace body that is subjected to heat is the furnace bottom part 3. When the temperature of the furnace bottom part 3 reaches 600°C or greater, FeO is generated. In this case, the temperature at which alumina reacts with the FeO and infiltrates is 1330°C or greater, and the temperature at which silica reacts with the FeO and infiltrates is 1180°C or greater. Consequently, in order to prevent such infiltration, it is preferable to use graphite or magnesia for the lining of the steel shell in the furnace floor part 3. Moreover, in order to prevent these types of thermal effects, it is preferable to cool the outer surface of the steel shell. The upper part of the vertical furnace body 1 forms a feed port 2 for the raw material 10. The raw material 10 is a material that contains an iron ore and a carbon source; for example, a mixed powder of iron ore powder and coke powder. Examples of carbon sources include coke powder, graphite powder, and coal powder. The furnace floor part 3 at the lower of the vertical furnace body 1 has an inner surface area that widens slightly from the furnace head part, but the vertical furnace body 1 may also have a shape that basically functions only to induce the raw material 10 to fall. Accordingly, the interior of the vertical furnace body 1 does not admit reaction product gas. Consequently, powder can be used as the raw material. However, if [the furnace is constituted] so that the reaction product gas rises through the interior of the vertical furnace body 1, then the interior of the vertical furnace body 1 will reach about 500°C, allowing the raw material in the upper part of the vertical furnace body 1 to be preheated to the temperature of the reaction product gas. The lower part of the shaft part in blast furnaces widens, and, when the temperature additionally increases below this widened part, the raw material will form into a sinter and contract, assuming a form in which the lower portion is slightly constricted (bosh). The raw material can also contract in the furnace bottom part 3 of the microwave smelting furnace as well, but there is no need to constrict this section, and it can be formed with vertical walls. The upper part of the vertical furnace body 1 may be slightly constricted and may be provided with a shape that substantially widens towards the bottom.

The furnace bottom part 3 of the vertical furnace body 1 communicates with a microwave irradiation chamber 4 that is provided so that it widens sideways from the bottom side part of the of the. The microwave irradiation chamber 4 is ring-shaped and encompasses the periphery of the furnace bottom part 3 of the vertical furnace body 1 the home network 1, and an adjacent microwave introduction window 6 is provided on the outside thereof. The microwave introduction window 6 can be provided as multiple (e.g., 6) units in locations that are equally distributed along the circumferential direction of the furnace bottom part 3. The microwave irradiation chamber 4 and microwave introduction chambers 6 are separated by a perpendicular wall, but the two communicate via a hole 5a provided in the wall. The upper surface of the microwave irradiation chamber 4 has a convex surface that curves to form an upwards protrusion. In addition, the side surface of each of the microwave introduction chambers 6 has a part that extends outwards, widening the internal space outwards. Microwave introduction windows 5 for introducing microwaves into the chamber are provided on the outside surfaces of the extension parts. Consequently, the microwave introduction windows 5 are provided on the microwave introduction chambers 6 in locations that are equally distributed about the center of the furnace body in the circumferential direction of the furnace body. The inner surface of the microwave irradiation chamber 4 is lined with a material that reflects microwaves. Examples of materials that reflect microwaves of this type which can be used at high temperatures include copper or copper alloys, stainless steel, gold-coated stainless steel, and other materials that reflect electromagnetic waves (microwave or infrared light), as well as materials such as graphite that reflect microwaves but absorb and re-irradiate infrared light. In this case, the material that constitutes the inner surface of the microwave irradiation chamber 4 (lining material) is preferably a material that reflects infrared light as well as microwaves. By having heat irradiated through the reflection of infrared light, the heat inside the microwave irradiation chamber 4 can be effectively utilized for heating the raw material. The lining material for the microwave irradiation chamber 4 is microwave-reflective copper or copper alloy, and it is preferable to cool the material with water. In addition, with copper or a copper alloy, there is the potential for corrosion due to sulfur or the like that is generated in the furnace For this reason, it is preferable for the inner surface of the copper or copper alloy lining material to be coated with silica that allows passage of microwaves.

Reflective mirrors 6a, 6b are disposed inside the microwave introduction chamber 6, and the microwaves MW enter into the microwave introduction chamber 6 after passing through the microwave introduction window 5. The microwaves are then reflected at the convex reflective mirror 6b towards the concave reflective mirror 6a, and are then directed towards the hole 5a. The microwaves then pass through the hole 5a, entering into the microwave irradiation chamber 4. The microwave introduction windows 5 are formed from a material such as silica that allows microwaves to pass through (microwaves not absorbed). In addition, the reflective mirrors 6a, 6b can be formed from copper or copper alloy that reflects microwaves. However, the copper or copper alloy reflective mirrors 6a, 6b are preferably cooled with water.

The bottom surfaces of the outward extension parts of the microwave introduction chambers 6 are provided with introduction members 11 whereby nitrogen gas (N₂) is introduced into the microwave introduction chambers 6. A waste gas discharge member 12 that discharges nitrogen gas and reaction gas is provided on the top surface of the microwave irradiation chamber 4. The structure of the microwave irradiation chamber 4 and the microwave introduction chambers 6 is not restricted to the structure described above, and various types of structures may be adopted. In this embodiment, the microwave irradiation chamber 4 has a ring-shaped structure provided around the furnace bottom part 3, and the microwave introduction chambers 6 have a multi-chamber structure with each communicating individually with the microwave irradiation chamber 4. However, the microwave introduction chamber 6 may also have a ring shape that is similar to the microwave irradiation chamber 4. In addition, rather than a ring shape, the microwave irradiation chamber 4 may have a structure with a plurality of individual chambers that are provided in locations that are equally distributed in the circumferential direction on the furnace bottom part 3. In addition, when each of the chambers is provided individually, they need not be provided at locations that are equally distributed.

In the furnace floor of the furnace bottom part 3, a furnace floor member 7 is provided inserted towards the interior of the furnace from below to above in the vertical furnace body 1. This furnace floor member 7 has an upper end part that is formed as curved surface that protrudes upwards. Specifically, the furnace floor member 7 has an upper surface that constitutes a convex surface with a center that protrudes upwards. The furnace floor member 7 is formed from a refractory material or a carbon material such as graphite. The furnace floor member 7 is supported so that it can move vertically by a suitable support drive device (not shown). The furnace floor member is preferably disposed so that it is coated with molten pig iron during operation of the smelting furnace.

In the furnace floor of the furnace bottom part 3, a ring-shaped support member 8 is disposed around the periphery of the furnace floor member 7, and the support member 8 constitutes the furnace floor of the vertical furnace body 1 along with the furnace floor member 7. On the outside of the support member 8, a plurality of take-off openings 9 for removing the molten pig iron that has been heated and reduced are provided at a plurality of locations that are separated in the circumferential direction of the support member 8 at locations that are equally distributed in the circumferential direction of the furnace body, with the center of the furnace body as the center. The support member 8 is molded from a material that does not react with the molten pig iron; e.g., graphite. The support member 8 must have good contact with the pig iron. If not, then the molten pig iron flow will become an antenna, and microwaves will escape externally.

The microwave irradiation device (not shown) emits microwaves MW from a microwave oscillator, and the microwaves MW are conducted to the microwave introduction window 5 of the microwave introduction chamber 6. The microwaves that have been generated by the microwave oscillator are conducted in the direction of the microwave introduction window 5. The microwave oscillator generates microwaves having one or a plurality of frequencies in the frequency range of 0.915 to 140 GHz. The magnetite of the iron ore is estimated to have peak microwave absorption in the vicinity of 2 GHz. 2.45 GHz is an industrial frequency that is near this frequency of maximum microwave absorption. 915 MHz (0.915 GHz) is a low-frequency long wavelength used for increased compatibility with scaling up of the vertical microwave smelting furnace. If, however, absorption of microwaves by the iron ore is too great, the reaction layer at the tuyere (raw material feed part near the microwave irradiation chamber 4) will decrease in thickness, and microwaves will not sufficiently penetrate into the raw material when the size of the vertical microwave smelting furnace is increased. In such a case, the microwave frequency must be increased. Physically, the magnetism (electron spin) of the magnetite tends not to change correspondingly as the frequency increases, and the microwave absorption decreases; therefore, the microwave penetration depth increases. For this reason, increasing the microwave frequency will increase the microwave penetration depth, and the depth of the reaction layer will be ensured. The maximum frequency of the microwaves is thus about 140 GHz. Peak microwave absorption is 20 GHz for water and 60 GHz for oxygen. Accordingly, it is necessary to use milliwave microwaves in order to increase the size of the vertical smelting furnace.

The microwave irradiation device controls the microwave wave front by controlling the microwave phase. This is the same principle as used in Aegis phased array radar. By controlling the microwave wave front, the beam direction is thus electrically changed, allowing the raw material in the tuyere (raw material feed part near the microwave irradiation chamber 4) to be uniformly heated. In this regard, the principle is different from devices in which microwaves are distributed using a stirrer (metal blade), or an object to be heated is caused to rotate, as with a microwave oven.

The vertical furnace body 1 is supported by a suitable support device, and a ladle (not shown) for transferring the molten pig iron is disposed under the molten pig iron take-off opening 9 provided in the bottom part of the vertical furnace body 2. In addition, the upper part of the vertical furnace body 1 is connected to a cyclone (not shown), and reaction product gas and nitrogen gas inside the vertical furnace body 1 are discharged externally as exhaust gas after having been cleaned in the cyclone.

The operation of the vertical microwave smelting furnace configured in the manner described above will be described next. Because the pig iron is continuously produced, raw material 10 is continuously introduced into the vertical furnace body 1 from the raw material feed port in the upper part of the vertical furnace body 1. This raw material is a mixed powder of iron ore powder, coke powder, graphite powder, coal powder, and the like, and is fed so that the entire vertical furnace body 1 is nearly completely packed. In this embodiment, gas is not made to flow into the vertical furnace body 1. For this reason, powder can be used as the raw material. However, the mixed powder may also be hardened into the shape of pellets. The raw material 10 is fed towards the peripheral parts from the center of the vertical furnace body 1, because the upper surface of the furnace floor member 7 provided on the furnace floor part is curved to protrude upwards. The microwave irradiation chamber 4 is disposed in the peripheral part of the furnace floor part of the vertical furnace body 1, and the raw material 10 that has slid across the upper surface of the furnace floor member 7 is directed towards the microwave irradiation chamber 4.

On the other hand, the microwaves MW that have been generated by the microwave oscillator are rectified into the form of a beam and caused to enter the microwave introduction chamber 6 via the microwave introduction window 5 and impinge on the reflective mirror 6b. The microwaves MW are reflected by the reflective mirror 6b and the reflective mirror 6a and are then introduced into the microwave irradiation chambers 4 via the holes 5a. Next, the raw material 10 that has been fed into the microwave irradiation chamber 4 is heated by irradiation with the focused microwaves MW, and the iron ore is reduced by the carbon source to produce molten pig iron. Specifically, the iron ore powder, coke powder, graphite powder, carbon powder, and the like in the raw material 10 absorb the microwaves and undergo self-heating, resulting in a temperature elevation. As a result, the iron ore powder reacts with the coke powder, the graphite powder, the coal powder, or other carbon source, causing reduction of the iron ore along with melting and producing molten pig iron MI. This molten pig iron MI is taken off from the take-off opening 9 and is collected in the ladle. The molten pig iron MI is continuously taken off, and raw material 10 is continuously fed from the feed port in the upper part of the vertical furnace body 1 into the vertical furnace body 1. The molten pig iron MI is thus continuously tapped.

The microwave introduction window 5 is formed from silica or the like that does not absorb microwaves. In this embodiment, a microwave introduction chamber 6 is provided on the outside of the microwave irradiation chamber 4, and reflective mirrors 6a, 6b are disposed in the microwave introduction chamber 6. By introducing nitrogen gas into the microwave introduction chamber 6, the microwave introduction chamber 6 and the microwave irradiation chamber 4 are shielded from external air. The reaction product gas that has been generated by the reaction between the raw material iron ore and carbon source and the gas that has passed through the microwave introduction chamber 6 and the microwave irradiation chamber 4 are discharged as waste gas from a discharge member 12. This waste gas is at a comparatively high temperature, and the heat quantity can be used for preheating the raw materials. In addition, the microwave introduction windows 5 are made from silica or the like, and there is concern regarding staining with raw material carbon powder. However, in this embodiment, the microwave introduction part in the microwave irradiation chamber 4 is formed from a simple hole 5a, and the microwave introduction window 5 that is made from silica is disposed on the outer surface of the microwave introduction chamber 6, so that the silica will not be stained by the carbon powder.

The microwaves MW are reflected at the inner surfaces inside the microwave irradiation chamber 4. The microwaves will not escape from the microwave irradiation chamber 4 and will be efficiently made to focus on the raw materials inside the microwave irradiation chamber 4. The raw material can thus be heated with high efficiency. The microwaves are used exclusively for irradiating the raw materials 10 inside the microwave irradiation chamber 4, and there is almost no release of microwaves from the microwave irradiation chamber 4. For this reason, even if the vertical furnace body 1 is manufactured from stainless steel material that readily absorbs microwaves, the microwaves will not enter into the vertical furnace body 1 to be absorbed by the vertical furnace body 1, and there will be no microwave loss. In addition, the raw material 10 reaches high temperatures inside the vertical furnace body 1, and wustite (FeO) is generated, but an advantage is presented that magnesia reacts with wustite, thereby reducing infiltration. However, conversely, if the vertical furnace body 1 is lined with alumina, although alumina absorbs little of the microwaves, the alumina will chemically react with the wustite and the wustite will continue to infiltrate the furnace body. As a result, by retaining the raw materials 10 in the vertical furnace body 1 and irradiating the raw materials 10 with microwaves inside the microwave irradiation chamber 4 in the present invention, problems with loss of microwaves and wustite infiltration can be resolved. Moreover, by using a material that reflects infrared light as the refractory material for the lining of the vertical microwave smelting furnace 4, the radiant heat from the high-temperature molten pig iron will also be enclosed within the microwave irradiation chamber 4, and the raw material 10 inside the microwave irradiation chamber 4 can be more efficiently heated.

The furnace floor member 7 can be moved vertically with a suitable suspension drive device. The raw material 10 passes through a gap between the furnace floor member 7 and the lower part of the side walls of the vertical furnace body 1 and is thereby transferred towards the microwave irradiation chamber 4. For this reason, by adjusting the vertical position of the furnace floor member 7, the feed rate of raw material 10 that is fed to the microwave irradiation chamber 4 can be adjusted.

Moreover, when the furnace floor member 7 is manufactured from a carbon material, the carbon of the furnace floor member 7 reacts with the molten pig iron MI and the furnace floor member 7 is continually consumed. For this reason, when the furnace floor member 7 is manufactured from carbon material, it is necessary to continually raise the furnace floor member 7. By manufacturing the furnace floor member 7 from a carbon material in this manner, the furnace floor member also acts as a carbon source for reacting with the iron ore. In addition, when a carbon material is used for the furnace floor member, the carbon material reflects microwaves, and so there is the advantage that the microwaves can be effectively used for heating the raw material.

Gas is generated by the reaction between the carbon material and the molten pig iron MI. In addition, by heating the raw material 10, the iron ore and the carbon source react, generating CO, CO₂ and other reaction gases. In this embodiment, a tuyere is provided in the lower part of the vertical furnace body 1, and inert nitrogen gas is blown into the furnace from this tuyere, generating a gas flow from the microwave irradiation chamber 4 towards the vertical furnace body 1. For this reason, even though reaction gas is generated by the reaction between iron ore and carbon source, the reaction gas is discharged from the upper part of the vertical furnace body 1 due to the gas flow of the nitrogen gas, preventing counter-flow of reaction gas inside the microwave irradiation chamber 4.

In this embodiment, the shape of the upper surface of the furnace member 7 is curved, but this description does not restrict the present invention, and various shapes may be used for the furnace floor member 7, provided that the shape allows the raw material 10 falling downward through the vertical furnace body 1 to be guided towards the microwave irradiation chamber 4 at the peripheral part of the furnace bottom. In addition, the shape of the upper surface furnace floor member 7 is preferably one whereby it is easy to adjust the raw material feed rate from the vertical furnace body 1 to the microwave irradiation chamber 4.

The hypo-eutectic zone is where the reduced iron absorbs carbon to produce pig iron, and this hypo-eutectic zone has a temperature of 1400°C and a carbon concentration of 1.8 mass%. When the pig iron contacts graphite and becomes saturated with carbon, the carbon concentration becomes 4.8 mass%. Consequently, when unsaturated pig iron comes into contact with the graphite material of the furnace floor member 7, loss of furnace floor member 7 occurs. The reaction gas is CO gas, CO₂ gas, and a small quantity of N₂ gas. This reaction gas is not discharged via the vertical furnace body 1, but is discharged via the gas discharge member 12 that is provided in the microwave irradiation chamber 4. The volume of this discharged gas, converted to 0°C and 1 atm, is 10 L with respect to the production of 50 g of iron. If the discharge gas temperature is taken to be 550°C, then the volume of the discharge gas is 30 L. With a Hitachi one-ton smelting furnace, the amount of discharged gas is 600 m³ per day and 42 L per minute. If this gas is used for preheating the raw material, then power usage could be dramatically reduced. In addition, the CO concentration in the exhaust gas is near 50%, and the large amount of generated energy could be used as heating energy for steps downstream from iron production.

Electronic device waste material can be used as raw material in the present invention. In this case, it is possible to recover precious metals and rare metals such as gold (Au), platinum (Pt), and palladium (Pd), and the like as smelting products. When precious metals and rare metals are recovered by this type of "urban mining," nitrogen gas is not fed to the microwave introduction chamber 6 from the gas introduction member 11. Rather, gas containing oxygen is fed to the microwave introduction chamber 6 from the gas introduction opening 11. When this is done, epoxy resin and the like in the circuit boards of the electronic device waste material absorb the microwaves and are heated when irradiated with microwaves, and the epoxy resin and the like react with the oxygen and combust. The waste gas is exhausted from the upper part of the vertical furnace body 1. In concert therewith, the precious metals and rare metals in the wiring and terminals are melted, and the precious metals and rare metals accumulate in the furnace bottom part 3. The melted rare and precious metals are then taken off from the take-off opening 9.

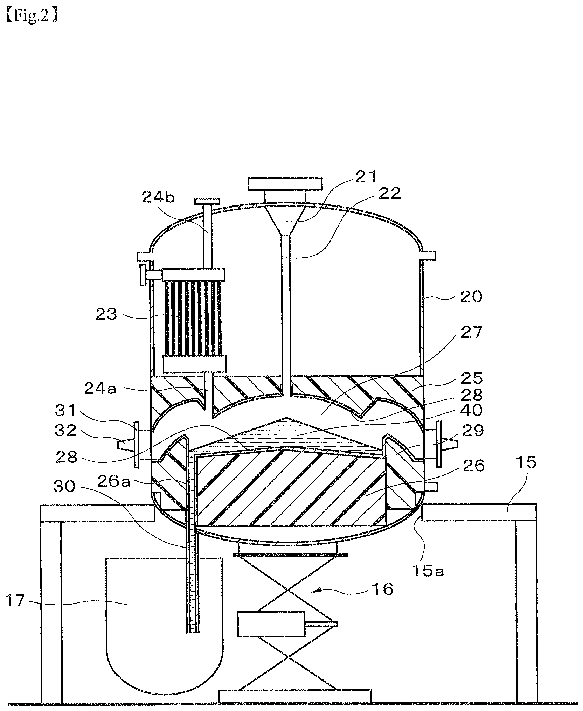

A second embodiment of the present invention is described below with reference to Fig. 2. The vertical furnace body 20 is made from stainless steel and has a cylindrical shape, with a bottom part that fits into an opening part 15a in a frame 15, thereby being supported on the frame 15. In addition, the center of the outer bottom part of the furnace body 20 is supported so that it can be moved vertically by a raising/lowering device 16. By lowering the raising/lowering device 16, the dielectric material of the lining 28 of an applicator 27 and the furnace floor part 26 can be repaired or replaced. A ladle 17 is disposed in the lower part of the frame 15, and a discharge tube 30 for the smelting product (molten pig iron) that protrudes downwards from the lower surface of the furnace body 20 inserts into the ladle 17. The ladle 17 is disposed on a separate raising-lower device (not shown), and, by raising and lowering the ladle 17 with this raising/lowering device, it is possible to transport out the ladle 17 form the lower part of the frame 15, even when the discharge tube 30 is inserted into the ladle 12. In addition, after the empty ladle 17 is situated under the stand 15, the device for raising/lowering the ladle 17 is raised, whereby the discharge tube 30 is inserted into the ladle 17. In the same manner as the lining 28 described below, the discharge tube 30 through which the molten pig iron flows is formed from graphite and is grounded together with the lining 28 as described below.

In the furnace body 20, the furnace head part 25 formed from a refractory is disposed so that the inner part of the furnace body 20 is partitioned into an upper part and lower part. In addition, a furnace floor part 26 formed from a refractory is disposed in the bottom part of the furnace body 20. An applicator 27 is formed as a reaction space between the furnace head part 25 and the furnace floor part 26. The upper surface of the furnace floor part 26 rises up rapidly at the peripheral parts, forming an elevated part 29 that partitions the hearth for molten metal. In addition, the center main body part of the furnace floor part 26 has an upper surface that rises upwards slowly towards the middle, forming an inclined surface that is inclined from the center towards the peripheral parts. A hole 26a that extends vertically is formed at the lowermost position of the inclined surface of the main body part of the furnace floor part 26, specifically, at a position that is adjacent to the inner surface of the elevation part 29. A discharge tube 30 connects to this hole 26a. The lining 28 that is formed from a conductive substance is provided on the surface that partitions the applicator 27, specifically, the surface that faces the applicator 27 in the furnace head part 25 and the surface that faces the applicator 27 in the furnace part 26. A lining 28 formed from conductive substance is also formed on the inner surface of the hole 26a. The furnace head part 25 and the furnace floor part 26 are formed, for example, from refractory material such as mullite or alumina. The conductive lining 28 is a sheet, plate or block that is formed, for example, from graphite. This lining 28 has refractory properties whereby it can withstand the heat of the molten pig iron, while also being conductive and reflecting microwaves. The lining 28 that is formed from this conductive substance is electrically connected to the furnace body 20 and is grounded via the furnace body 20. A water-cooled copper plate is provided on the inclined surface of the elevated part 29 and on the bottom surface of the furnace head part 25 thereabove that faces the applicator 27. The surface of this water-cooled copper plate is coated with conductive lining 28 that reflects microwaves (e.g., graphite). The lining 28 at the peripheral parts of the applicator 27 and the furnace body portion can be cooled by this water-cooled copper plate.

On the other hand, for example, a suitable heating member such as a resistance heating coil (not shown) is provided in the furnace floor part 26, so that the furnace floor part 26 is heated by this heating member. As a result, the fall in temperature occurring during collection of the molten pig iron in the furnace floor part 26 is controlled.

A window 31 made from silica for introducing microwaves into the applicator 27 is provided in the side surface of the furnace body 20, and a microwave waveguide tube 32 is connected to this window 31. The silica window 31 seals off the space of the applicator 27, and, because silica allows passage of microwaves, the microwaves can be introduced into the applicator 27. The waveguide tube 32 and window 31 are disposed in four positions that are equally distributed in the circumferential direction of the furnace body 20.

An exhaust gas heat exchanger 23 is provided in the upper furnace body 20 of the furnace head part 25. With this exhaust gas heat exchanger 23, a tube 24a that passes through the furnace head part 25 is connected to the gas inlet thereof, and a tube 24b that passes through the furnace body 20 is connected to the gas outlet thereof. The exhaust gas in the applicator 27 is exhausted from the furnace body 20 via the tubes 24a, 24b, and the heat of the exhaust gas is recovered in conjunction by the exhaust gas heat exchanger 23.

One or more hopper-form raw material feed parts 21 is provided in the head part of the furnace body 20, and a raw material feed tube 22 that extends vertically is disposed in the upper space of the head part 25 in the furnace body 20. The raw material feed tube 22 has a lower part that inserts into the furnace head part 25 and communicates with the applicator 27, and the upper part thereof connects with the raw material feed part 21. A screw-type powder conveyance member is provided inside the raw material feed tube 22, and the powder raw material is thereby sent downward through the raw material feed tube 22 from the raw material fed part 21, dropping into the applicator 27 from the lower end of the raw material feed tube 22.

The following describes the operation of the second embodiment having the configuration described above. As with the first embodiment, the raw material is introduced into the applicator 27 from the raw material feed tube 22 and is irradiated in the applicator 27 with microwaves from the waveguide 32 via the silica window 31. When this occurs, the powdered raw material is retained on the furnace floor part 26, and the microwaves are reflected by the lining 28 composed of grounded conductive substance on the interior of the applicator 27 and are absorbed by the powdered raw material on the furnace floor part 26. As a result, the powdered raw material is heated and melted, generating a refining reaction and producing a mixture 40 of molten pig iron and raw material. The microwaves are reflected by the lining 28 on the lower surface of the furnace head part 25 and impinge upon the mixture 40 of the raw material and molten pig iron on the furnace floor part 26. The microwaves are absorbed, and the mixture 40 of the raw materials and molten pig iron is heated. In addition, raw material powder is continuously fed to the applicator 27 from the raw material feed tube 22, the microwaves are absorbed by the raw material powder, and heating occurs. The microwaves that are introduced from the waveguide tube 32 are reflected by the lining 28 on the inclined surfaces on the outer margin of the elevated part 29 and are subsequently repeatedly reflected by the lining 28 and are absorbed by the raw material powder and the molten pig iron on the furnace floor part 26. On the other hand, the microwaves that have been reflected towards the peripheral parts of the applicator 27 at the mixture 40 of the molten pig iron and the raw material are blocked by the elevated part 29, preventing them from returning to the waveguide tube 32 via the window 31. As a result, concern over malfunction of the microwave generation device that is connected to the waveguide tube 32 can be avoided.

In this embodiment, microwaves are repeatedly reflected by the lining 28 that is made from grounded conductive substance in the applicator 27 which is the space between the furnace head part 25 and the furnace floor part 26, and the microwaves are thus trapped in the applicator 27. Consequently, the raw material powder that is fed into the applicator 27 is efficiently irradiated with microwaves, and the raw material powder absorbs the microwaves and is heated. The microwaves are trapped in the applicator 27 with very little leakage, and the microwaves can be used efficiently for heating the raw material powder. As a result, the raw material powder is efficiently heated, and a refining reaction can be generated.

### INDUSTRIAL APPLICABILITY

The present invention provides pig iron by using microwave heating to effect the reduction of iron ore rather than using a conventional blast furnace iron production method. The present invention thus contributes greatly to improving energy efficiency and decreasing equipment size in iron production processes. According to the present invention, precious metals and rare metals can also be recovered by "urban mining" from electronic device waste material and the like.

### DESCRIPTION OF THE REFERENCE

- 1, 20:: Vertical furnace body
- 2, 21:: Raw material feed port
- 3:: Furnace bottom part
- 4:: Microwave irradiation chamber
- 5:: Microwave introduction window
- 5a:: Hole
- 6:: Microwave introduction chamber
- 6a, 6b:: Reflective mirror
- 7:: Furnace floor member
- 8:: Support part
- 9:: Take-off opening
- 10:: Raw material
- 11:: Gas introduction member
- 12:: Exhaust gas discharge member
- 22:: Raw material feed tube
- 25:: Furnace head part
- 26:: Furnace floor part
- 27:: Applicator
- 28:: Lining (conductive substance)
- 29:: Elevated part
- 30:: Discharge tube
- 32:: Microwave waveguide tube

## Claims

1. A vertical microwave smelting furnace, comprising:
a vertical furnace body (1) having in an upper part a raw material feed port;
a furnace floor member (7) provided on a furnace bottom (3) of the vertical furnace body (1);
a microwave irradiation chamber (4) that communicates with said vertical furnace body (1) in a lower side part of said vertical furnace body (1), that is provided so as to widen sideways from the lower side part, and that has at least a portion of an inner wall made of a material that reflects microwaves;
a smelting product take-off opening (9) that is provided in a lower part of the microwave irradiation chamber (4);
a microwave introduction window (5) that is formed from a material that admits microwaves (MW) in order to introduce microwaves (MW) into said microwave irradiation chamber (4); and
a microwave irradiation device for irradiating the interior of said microwave irradiation chamber (4) with microwaves (MW) via said microwave introduction window (5),
wherein said microwave irradiation chamber (4) is adapted to reflect the microwaves (MW) at said inner wall and to focus the microwaves (MW) on said raw material and at least a part of the inner wall of said microwave irradiation chamber (4) is lined with microwave-reflective copper or a copper alloy, stainless steel, gold-coated stainless steel, or graphite.

2. A vertical microwave smelting furnace, comprising:
a vertical furnace body (20) having one or a plurality of raw material feed ports in an upper part;
a furnace head part(25) made from a refractory that is provided in the furnace body (20) and partitions an interior of the furnace body (20) into an upper part and lower part;
a furnace floor part (26) made from a refractory that is provided in a furnace floor of the vertical furnace body (20), an applicator (27) that is a reaction space being formed between the furnace floor part (26) and said furnace head part (25);
a lining (28) for reflecting microwaves, the lining (28) provided on surfaces of said furnace floor part (26) and furnace head part (25) facing said applicator (27), the lining (28) being grounded, and the lining (28) being made of a conductive substance;
a smelting product take-off opening (26a, 30) that is provided on said furnace floor part (26);
a microwave introduction window (31) that is formed from a material that admits microwaves in order to introduce microwaves into said applicator (27); and
a microwave irradiation device for irradiating the interior of said applicator (27) with microwaves via said microwave introduction window (31),
wherein said applicator (27) is adapted to repeatedly reflect the microwaves at said lining (28) in order to heat said raw material, which absorbs the microwaves, and the conductive substance of the lining (28) is microwave-reflective copper or a copper alloy, stainless steel, gold-coated stainless steel, or graphite.

3. The vertical microwave smelting furnace according to claim 1 or 2, wherein said raw material includes iron ore and a carbon source, and said smelting product is molten pig iron.

4. The vertical microwave smelting furnace according to claim 1 or 2, wherein said raw material is a mixed powder of iron ore and coke, and said microwave irradiation device irradiates microwaves at one or a plurality of frequencies in the range of 0.915 to 140 GHz.

5. The vertical microwave smelting furnace according to claim 4, wherein said microwave irradiation device controls a wave front and phase of the microwaves to electrically change the direction of the beam.

6. The vertical microwave smelting furnace according to claim 1, wherein said furnace floor member (7) is inserted into the furnace from below the furnace bottom (3);
the upper surface constitutes a convex surface that protrudes upwards at the center and is supported so as to allow vertical movement; and
adjusting the vertical position of said furnace floor member (7) adjusts the aperture area between the lower side wall of said vertical furnace body (1) and said furnace floor member (7), and adjusts a rate at which said raw material is supplied into said microwave irradiation chamber (4).

7. The vertical microwave smelting furnace according to claim 6, wherein said furnace floor member (7) is made of a material having carbon as a primary component, wherein said furnace floor member (7) reacts with the molten pig iron and is consumed.

8. The vertical microwave smelting furnace according to claim 1 or 2, wherein said vertical furnace body (1) is lined with graphite, alumina, or silica on the inside of a steel shell formed from a steel material.

9. The vertical microwave smelting furnace according to claim 1, wherein said furnace floor member (7) is disposed so as to be coated with molten pig iron during start-up of the smelting furnace.

10. The vertical microwave smelting furnace according to claim 1 or 2, wherein said raw material is a waste material from an electronic device, and said smelting product is a precious metal or rare metal.

11. The vertical microwave smelting furnace according to claim 2, wherein said lining is a graphite sheet, plate, or block.

## Patentansprüche

1. Vertikaler Mikrowellenschmelzofen, der Folgendes umfasst:
einen vertikalen Ofenkörper (1), der in einem oberen Teil eine Rohmaterial-Einfüllöffnung aufweist;
ein Ofenbodenelement (7), das auf einem Ofenboden (3) des vertikalen Ofenkörpers (1) bereitgestellt ist;
eine Mikrowellenbestrahlungskammer (4), die mit dem vertikalen Ofenkörper (1) in einem unteren Seitenteil des vertikalen Ofenkörpers (1) in Verbindung steht, die so bereitgestellt ist, dass sie sich seitwärts von dem unteren Seitenteil verbreitert und dass sie mindestens einen Teil einer inneren Wand hergestellt aus einem Material, das Mikrowellen reflektiert, aufweist;
eine Schmelzprodukt-Abnahmeöffnung (9), die in einem unteren Teil der Mikrowellenbestrahlungskammer (4) bereitgestellt ist;
ein Mikrowellen-Einführungsfenster (5), das aus einem Material gebildet ist, das Mikrowellen (MW) hereinlässt, um Mikrowellen (MW) in die Mikrowellenbestrahlungskammer (4) einzuführen; und
eine Mikrowellenbestrahlungsvorrichtung zum Bestrahlen des Inneren der Mikrowellenbestrahlungskammer (4) mit Mikrowellen (MW) mittels des Mikrowelleneinführungsfensters (5), wobei die Mikrowellenbestrahlungskammer (4) angepasst ist, die Mikrowellen (MW) an der inneren Wand zu reflektieren und die Mikrowellen (MW) auf das Rohmaterial zu fokussieren, und mindestens ein Teil der inneren Wand der Mikrowellenbestrahlungskammer (4) mit Mikrowellen reflektierendem Kupfer oder einer Kupferlegierung, Edelstahl, goldbeschichtetem Edelstahl oder Graphit ausgekleidet ist.

2. Vertikaler Mikrowellenschmelzofen, der Folgendes umfasst:
einen vertikalen Ofenkörper (20) der einen oder eine Anzahl an Rohmaterial-Einfüllöffnungen in einem oberen Teil aufweist;
einen Ofenkopfteil (25), der aus einem feuerfesten Material hergestellt ist und in dem Ofenkörper (20) bereitgestellt ist und ein inneres des Ofenkörpers (20) in einen oberen Teil und einen unteren Teil unterteilt;
einen Ofenbodenteil (26), der aus einem feuerfesten Material hergestellt ist und in einem Ofenboden des vertikalen Ofenkörpers (20) bereitgestellt ist, einen Applikator (27), der ein Reaktionsraum ist, der zwischen dem Ofenbodenteil (26) und dem Ofenkopfteil (25) gebildet ist;
eine Auskleidung (28) zum Reflektieren von Mikrowellen, wobei die Auskleidung (28) auf Oberflächen des Ofenbodenteils (26) und des Ofenkopfteils (25), dem Applikator (27) gegenüberliegend, bereitgestellt ist, wobei die Auskleidung (28) geerdet ist und die Auskleidung (28) aus einer leitenden Substanz hergestellt ist;
eine Schmelzprodukt-Abnahmeöffnung (26a, 30), die auf einem Ofenbodenteil (26) bereitgestellt ist;
ein Mikrowelleneinführungsfenster (31), das aus einem Material gebildet ist, das Mikrowellen hereinlässt, um Mikrowellen in den Applikator (27) einzuführen; und
eine Mikrowellenbestrahlungsvorrichtung zum Bestrahlen des Inneren des Applikators (27) mit Mikrowellen mittels des Mikrowelleneinführungsfensters (31), wobei der Applikator (27) angepasst ist, die Mikrowellen an der Auskleidung (28) wiederholt zu reflektieren, um das Rohmaterial, das die Mikrowellen absorbiert, zu erhitzen, und die leitende Substanz der Auskleidung (28) Mikrowellen reflektierendes Kupfer oder eine Kupferlegierung, Edelstahl, goldbeschichteter Edelstahl oder Graphit ist.

3. Vertikaler Mikrowellenschmelzofen gemäß Anspruch 1 oder 2, wobei das Rohmaterial Eisenerz und eine Kohlenstoffquelle einschließt und das Schmelzprodukt geschmolzenes Roheisen ist.

4. Vertikaler Mikrowellenschmelzofen gemäß Anspruch 1 oder 2, wobei das Rohmaterial ein gemischtes Pulver aus Eisenerz und Koks ist und die Mikrowellenbestrahlungsvorrichtung Mikrowellen bei einer oder einer Anzahl an Frequenzen in dem Bereich von 0,915 bis 140 GHz einstrahlt.

5. Vertikaler Mikrowellenschmelzofen gemäß Anspruch 4, wobei die Mikrowellenbestrahlungsvorrichtung eine Wellenfront und Phase der Mikrowellen steuert, um die Richtung des Strahls elektrisch zu ändern.

6. Vertikaler Mikrowellenschmelzofen gemäß Anspruch 1, wobei das Ofenbodenelement (7) von unterhalb des Ofenbodens (3) in den Ofen eingeführt ist;
die obere Oberfläche eine konvexe Oberfläche bildet, die in der Mitte nach oben vorsteht und so gelagert ist, dass sie vertikale Bewegung erlaubt; und
Einstellen der vertikalen Position des Ofenbodenelements (7) die Öffnungsfläche zwischen der unteren Seitenwand des vertikalen Ofenbodens (1) und dem Ofenbodenelement (7) einstellt und eine Rate einstellt, mit der das Rohmaterial der Mikrowellenbestrahlungskammer (4) zugeführt wird.

7. Vertikaler Mikrowellenschmelzofen gemäß Anspruch 6, wobei das Ofenbodenelement (7) aus einem Material hergestellt ist, dass Kohlenstoff als eine primäre Komponente aufweist, wobei das Ofenbodenelement (7) mit dem geschmolzenen Roheisen reagiert und verbraucht wird.

8. Vertikaler Mikrowellenschmelzofen gemäß Anspruch 1 oder 2, wobei der vertikale Ofenkörper (1) mit Graphit, Aluminiumoxid oder Siliciumoxid auf der Innenseite einer Stahlhülle, die aus einem Stahlmaterial gebildet ist, ausgekleidet ist.

9. Vertikaler Mikrowellenschmelzofen gemäß Anspruch 1, wobei das Ofenbodenelement (7) so angeordnet ist, dass es während des Anfahrens des Schmelzofens mit geschmolzenem Roheisen beschichtet wird.

10. Vertikaler Mikrowellenschmelzofen gemäß Anspruch 1 oder 2, wobei das Rohmaterial ein Abfallmaterial aus einer elektronischen Vorrichtung ist und das Schmelzprodukt ein Edelmetall oder seltenes Metall ist.

11. Vertikaler Mikrowellenschmelzofen gemäß Anspruch 2, wobei die Auskleidung ein/eine Graphitblatt, -platte oder -block ist.

## Revendications

1. Four de fusion vertical à micro-ondes, comprenant :
un corps de four vertical (1) ayant un orifice d'alimentation de matières brutes en partie supérieure ;
un élément formant plancher de four (7) prévu sur un fond de four (3) du corps de four vertical (1) ;
une chambre d'irradiation à micro-ondes (4) qui communique avec ledit corps de four vertical (1) dans une partie du côté inférieur dudit corps de four vertical (1), qui est prévue de manière à s'élargir vers les côtés depuis la partie du côté inférieur, et qui comprend au moins une portion d'une paroi intérieure faite d'un matériau qui réfléchit les micro-ondes ;
une ouverture de prélèvement de produit en fusion (9) qui est prévue dans une partie inférieure de la chambre d'irradiation à micro-ondes (4) ;
une fenêtre d'introduction de micro-ondes (5) qui est formée d'un matériau qui admet les micro-ondes (MW) afin d'introduire des micro-ondes (MW) dans ladite chambre d'irradiation à micro-ondes (4) ; et
un dispositif d'irradiation à micro-ondes pour irradier l'intérieur de ladite chambre d'irradiation à micro-ondes (4) avec des micro-ondes (MW) via ladite fenêtre d'introduction de micro-ondes (5),
dans lequel ladite chambre d'irradiation à micro-ondes (4) est adaptée à réfléchir les micro-ondes (MW) sur ladite paroi intérieure et à focaliser les micro-ondes (MW) sur lesdites matières brutes et au moins une partie de la paroi intérieure de ladite chambre d'irradiation à micro-ondes (4) est doublée de cuivre ou d'alliage de cuivre, d'acier inoxydable, d'acier inoxydable revêtu d'or, ou de graphite réfléchissant les micro-ondes.

2. Four de fusion vertical à micro-ondes, comprenait
un corps de four vertical (20) ayant un orifice ou une pluralité d'orifices d'alimentation de matières brutes dans une partie supérieure ;
une partie formant tête de four (25) réalisée en un matériau réfractaire qui est prévu dans le corps de four (20) et qui cloisonne un intérieur du corps de four (20) en une partie supérieure et une partie inférieure ;
une partie formant plancher de four (26) réalisée en un matériau réfractaire qui est prévu dans un plancher du corps de four vertical (20), un applicateur (27) qui est un espace de réaction formé entre la partie formant plancher de four (26) et la partie formant tête de four (25) ;
un doublage (28) pour réfléchir les micro-ondes, le doublage (28) étant prévu sur des surfaces de ladite partie formant plancher de four (26) et de ladite partie formant tête de four (25) en face dudit applicateur (27), le doublage (25) étant mis à la terre, et le doublage (28) étant réalisé d'une substance conductrice ;
une ouverture de prélèvement de produit en fusion (26a, 30) qui est prévue sur ladite partie formant plancher de four (26),
une fenêtre d'introduction de micro-ondes (31) qui est formée d'un matériau qui admet des micro-ondes afin d'introduire des micro-ondes dans ledit applicateur (27) ; et
un dispositif d'irradiation à micro-ondes pour irradier l'intérieur dudit applicateur (27) avec des micro-ondes via ladite fenêtre d'introduction de micro-ondes (31),
dans lequel ledit applicateur (27) est adapté à réfléchir de façon répétée les micro-ondes sur ledit doublage (28) afin de chauffer lesdites matières brutes, qui absorbent les micro-ondes, et la substance conductrice du doublage (28) est du cuivre ou un alliage de cuivre, de l'acier inoxydable, de l'acier inoxydable revêtu d'or, ou du graphite réfléchissant les micro-ondes.

3. Four de fusion vertical à micro-ondes selon la revendication 1 ou 2, dans lequel lesdites matières brutes incluent du minerai de fer et une source de carbone, et ledit produit en fusion est de la fonte de fer brute en fusion.

4. Four de fusion vertical à micro-ondes selon la revendication 1 ou 2, dans lequel lesdites matières brutes sont formées d'une poudre mélangée de minerai de fer et de coke, et ledit dispositif d'irradiation à micro-ondes irradie les micro-ondes à une fréquence ou une pluralité de fréquences dans la gamme de 0,915 à 140 GHz.

5. Four de fusion vertical à micro-ondes selon la revendication 4, dans lequel ledit dispositif d'irradiation à micro-ondes commande un front d'onde et une phase des micro-ondes pour changer électriquement la direction du faisceau.

6. Four de fusion vertical à micro-ondes selon la revendication 1, dans lequel ledit élément formant plancher de four (7) est introduit dans le four depuis le dessous du fond (3) du four ;
la surface supérieure constitue une surface convexe qui se projette vers le haut au centre et qui est supportée de manière à permettre un mouvement vertical ; et
l'ajustement de la position verticale dudit élément formant plancher de four (7) ajuste la superficie de l'ouverture entre la paroi de côté inférieure dudit corps de four vertical (1) et ledit élément formant plancher de four (7), et ajuste un débit auquel lesdites matières brutes sont alimentées dans ladite chambre d'irradiation à micro-ondes (4).

7. Four de fusion vertical à micro-ondes selon la revendication 6, dans lequel ledit élément formant plancher de four (7) est réalisé en un matériau ayant du carbone à titre de composant principal, dans lequel ledit élément formant plancher de four (7) réagit avec la fonte de fer brute en fusion et est consommé.

8. Four de fusion vertical à micro-ondes selon la revendication 1 ou 2, dans lequel ledit corps de four vertical (1) est doublé avec du graphite, de l'alumine, ou de la silice sur l'intérieur d'une coque de four formée d'un matériau à base d'acier.

9. Four de fusion vertical à micro-ondes selon la revendication 1, dans lequel ledit élément formant plancher de four (7) est disposé de manière à être revêtu de fonte de fer brute en fusion pendant le démarrage du four de fusion.

10. Four de fusion vertical à micro-ondes selon la revendication 1 ou 2, dans lequel lesdites matières brutes sont des matières de rebut de dispositifs électroniques, et ledit produit de fusion est un métal précieux ou un métal rare.

11. Four de fusion vertical à micro-ondes selon la revendication 2, dans lequel ledit doublage est une feuille, une plaque ou un bloc de graphite.
